# EUROPEAN PATENT APPLICATION

(11) **EP 4 832 459 A1**
(43) Date of publication of application: **28.10.2026**
(21) Application number: 25769148.5
(22) Date of filing: 21.01.2025
(51) Int. Cl.: H04L 67/61, H04L 67/568

(54) **DATA PROCESSING METHOD AND APPARATUS, ELECTRONIC DEVICE AND STORAGE MEDIUM**

(30) Priority: 15.03.2024 CN 202410298925
(71) Applicant: Chongqing Changan Technology Co., Ltd., Chongqing 401135 (CN)
(72) Inventor: TAN, Bing, Chongqing 401135 (CN); DUAN, Hanxiao, Chongqing 401135 (CN); HU, Qijie, Chongqing 401135 (CN); ZHAO, Zhenyu, Chongqing 401135 (CN)
(74) Representative: Håmsø Patentbyrå AS
(86) International application number: PCT/CN2025/073779
(87) International publication number: WO 2025/189974

(57) **Abstract**

A data processing method and apparatus, an electronic device, and a storage medium, relating to the technical field of communications. The method comprises: determining the data priority of target data, and storing the target data into a level in a target cache space corresponding to the data priority, wherein the target cache space comprises a plurality of levels, and the levels correspond to data priorities of data; and then, on the basis of a data priority order, executing a corresponding writing or reading operation on the data of different levels in the target cache space.

## Description

### CROSS-REFERENCE TO RELATED APPLICATIONS

The present application claims priority to Chinese Patent Application No. 202410298925.2 filed with the China National Intellectual Property Administration on March 15, 2024, and entitled "DATA PROCESSING METHOD AND APPARATUS, ELECTRONIC DEVICE AND STORAGE MEDIUM", the contents of which are incorporated herein by reference in its entirety.

### TECHNICAL FIELD

The present invention relates to the technical field of communications, and in particular to a data processing method, an apparatus, an electronic device, and a storage medium.

### BACKGROUND

With the development of vehicle intelligence, in order to meet the growing data transmission requirements of in-vehicle communications, a data distribution service (DDS) communication protocol has been increasingly widely used in the field of in-vehicle communications. The DDS communication protocol is a distributed real-time communication protocol, and realizes data transmission based on a user datagram protocol (UDP).

Considering factors such as traffic safety and user driving experience, vehicles and other transportation means are required to ensure good timeliness and reliability of data communication. However, due to the inherent limitations of the UDP, data transmission of the DDS communication protocol is often disordered, and timeliness and reliability of data transmission are poor under a condition that congestion occurs in a device.

### SUMMARY

The present invention provides a data processing method, an apparatus, an electronic device, and a storage medium, so as to at least solve the technical problem in the related art that the timeliness and reliability of data transmission are poor. The technical solutions of the present invention are as follows.

According to a first aspect of the present invention, a data processing method is provided. The data processing method includes: determining a data priority of target data; storing the target data into a level corresponding to the data priority in a target cache space, where the target cache space includes a plurality of levels, and the plurality of levels in the target cache space correspond to data priorities of data; and performing an operation on data of different levels in the target cache space according to a data priority order. In a case where the operation is a sending operation, the target cache space is a writer history cache, and in a case where the operation is a reading operation, the target cache space is a reader history cache.

According to the foregoing technical means, the data priority of the target data may be determined according to the present invention, so that the target data can be stored into the level corresponding to the data priority in the target cache space. Then, a data processing apparatus may perform a sending operation or a reading operation on data of different levels in the target cache space according to the data priority order. In this way, the data processing apparatus in the present invention can preferentially send or read data with a higher data priority, thus avoiding problems of delay and loss of important data during network congestion, and ensuring transmission latency and reliability of important data.

In an embodiment, the method further includes: determining a quality of service (QoS) policy corresponding to each of the plurality of levels in the target cache space. The operation of performing the operation on data of different levels in the target cache space according to the data priority order includes: performing the operation on data of different levels in the target cache space according to the data priority order and the QoS policy corresponding to each level.

According to the foregoing technical means, the present invention may configure a corresponding QoS policy for each level in the target cache space, so as to perform a corresponding operation on data in each level based on the data priority order and the QoS policy configured for each level. Since the levels in the target cache space of the present invention can be used for dividing data of different data priorities, compared with the related art in which QoS policy configuration can only be performed for the entire cache space, the technical solution provided by the present invention can realize the QoS policy configuration at a data granularity, thus ensuring the transmission reliability of important data while saving the device performance resources.

In an embodiment, the method includes: determining a target level from the target cache space, where data stored in the target level is data with a highest data priority in the target cache space at a current time; and performing the operation on data in the target level.

According to the foregoing technical means, the present invention may select, from the target cache space, the target level in which data of with highest data priority is stored, and perform the operation on the data in the target level, thus ensuring the transmission latency requirements and reliability of high-priority data.

In an embodiment, the method includes: receiving a target message, where the target message includes a data priority parameter of the target data; and determining the data priority of the target data based on the target message.

According to the foregoing technical means, the present invention may determine the data priority of the obtained target data by receiving the target message carrying the data priority parameter, thus facilitating subsequent priority configuration at the data granularity.

In an embodiment, the method includes: obtaining data priorities of a plurality of pieces of data, where the plurality of pieces of data include the target data. After determining the data priority of the target data, the method further includes: obtaining a respective topic bound to each of the plurality of pieces of data, where the topics are used to associate the writer history cache and the reader history cache; updating a topic priority list based on the data priorities of the plurality of pieces of data and the respective topic bound to each of the plurality of pieces of data, where the topic priority list includes a plurality of topics and a topic priority corresponding to each of the plurality of topics; and determining the target data from the plurality of pieces of data according to a topic priority order.

According to the foregoing technical means, the present invention may obtain the data priorities of the plurality of pieces of data, and update the topic priority list that includes the topic bound to each piece of data based on the data priorities. Subsequently, the data processing apparatus may select the target data from the plurality of pieces of data according to the topic priority order represented in the topic priority list to perform the subsequent data processing operations, thus achieving the priority configuration at the data level, and further ensuring the transmission latency requirements and reliability of important data.

In an embodiment, the method includes: determining, based on the data priorities of the plurality of pieces of data, a topic priority of the respective topic bound to each of the plurality of pieces of data; and updating the topic priority list based on the topic priority corresponding to each of the plurality of topics.

According to the foregoing technical means, the present invention may determine the topic priorities of topics bound to data based on the data priorities of the current plurality of pieces of data, thus dynamically maintaining the topic priority list. In this way, the data processing apparatus may determine the processing order of data according to the topic priorities in the topic priority list, thus achieving the priority configuration at the data granularity, and ensuring the transmission latency requirements and reliability of important data.

In an embodiment, the method includes: determining a target topic from the topic priority list at a current time, where the target topic is a topic with a highest topic priority in the topic priority list; and taking data bound to the target topic from the plurality of pieces of data as the target data.

According to the foregoing technical means, the present invention may select, from the current topic priority list, the target topic with the highest topic priority, and take the data bound to the target topic as the target data to perform the subsequent data processing operations, thus ensuring the transmission latency requirements and reliability of high-priority data.

According to a second aspect of the present invention, a data processing apparatus is provided. The data processing apparatus includes: a processing unit configured to determine a data priority of target data. The processing unit is further configured to store the target data into a level corresponding to the data priority in a target cache space, where the target cache space includes a plurality of levels, and the plurality of levels in the target cache space correspond to data priorities of data. The processing unit is further configured to perform an operation on data of different levels in the target cache space according to a data priority order, where in a case where the operation is a sending operation, the target cache space is a writer history cache, and in a case where the operation is a reading operation, the target cache space is a reader history cache.

In an embodiment, the processing unit is further configured to: determine a QoS policy corresponding to each of the plurality of levels in the target cache space; and perform an operation on data of different levels in the target cache space according to the data priority order and the QoS policy corresponding to each of the plurality of levels.

In an embodiment, the processing unit is further configured to: determine a target level from the target cache space, where data stored in the target level is data with a highest data priority in the target cache space at a current time; and perform the operation on data in the target level.

In an embodiment, the apparatus further includes a communication unit configured to receive a target message, where the target message includes a data priority parameter of target data; and the processing unit is further configured to determine the data priority of the target data based on the target message.

In an embodiment, the processing unit is further configured to: obtain data priorities of a plurality of pieces of data, where the plurality of pieces of data include the target data; obtain a respective topic bound to each of the plurality of pieces of data, where the topic is used to associate the writer history cache and the reader history cache; update a topic priority list based on the data priorities of the plurality of pieces of data and the respective topic bound to each of the plurality of pieces of data, where the topic priority list includes a plurality of topics and a topic priority corresponding to each of the plurality of topics; and determine the target data from the plurality of pieces of data according to a topic priority order.

In an embodiment, the processing unit is further configured to: determine, based on the data priorities of the plurality of pieces of data, a topic priority of the respective topic bound to each of the plurality of pieces of data; and update the topic priority list based on the topic priority corresponding to each of the plurality of topics.

In an embodiment, the processing unit is further configured to: determine a target topic from the topic priority list at a current time, where the target topic is a topic with a highest topic priority in the topic priority list; and take data bound to the target topic from the plurality of pieces of data as the target data.

According to a third aspect of the present invention, an electronic device is provided. The electronic device includes: a processor, and a memory configured to store instructions executable by the processor, where the processor is configured to execute the instructions to perform the method according to the first aspect and any one of the embodiments in the first aspect.

According to a fourth aspect of the present invention, a computer-readable storage medium is provided. The computer-readable storage medium is configured to store instructions which, when executed by a processor of an electronic device, cause the electronic device to perform the method according to the first aspect and any one of the embodiments in the first aspect.

According to a fifth aspect of the present invention, a computer program product is provided. The computer program product includes computer instructions which, when executed by an electronic device, cause the electronic device to perform the method according to the first aspect and any one of the embodiments in the first aspect.

Therefore, the foregoing technical features of the present invention have the following beneficial effects:
(1) The data priority of the target data may be determined according to the present invention, so that the target data can be stored into the level corresponding to the data priority in the target cache space. Then, a data processing apparatus may perform a sending operation or a reading operation on data of different levels in the target cache space according to the data priority order. In this way, the data processing apparatus according to the present invention can preferentially send or read data with a higher data priority, thus avoiding problems of delay and loss of important data during network congestion, and ensuring transmission latency and reliability of important data.
(2) A corresponding QoS policy may be configured for each level in the target cache space, so that a corresponding operation on data can be performed in each level based on the data priority order and the QoS policy configured for each level. Since the levels in the target cache space of the present invention can be used for dividing data of different data priorities, compared with the related art in which QoS policy configuration can only be performed for the entire cache space, the technical solution provided by the present invention can realize the QoS policy configuration at a data granularity, thus ensuring the transmission reliability of important data while saving the device performance resources.
(3) The target level in which data with the highest data priority is stored may be selected from the target cache space, and the operation on the data may be performed in the target level, thus ensuring the transmission latency requirements and reliability of high-priority data.
(4) The data priority of the obtained target data may be determined by receiving the target message carrying the data priority parameter, thus facilitating subsequent priority configuration at the data granularity.
(5) The data priorities of the plurality of pieces of data may be obtained, and the topic priority list that includes the topic bound to each piece of data may be updated based on the data priorities. Subsequently, the data processing apparatus may select the target data from the plurality of pieces of data according to the topic priority order represented in the topic priority list to perform the subsequent data processing operations, thus achieving the priority configuration at the data level, and further ensuring the transmission latency requirements and reliability of important data.
(6) The topic priorities of topics bound to data may be determined based on the data priorities of the current plurality of pieces of data, so that the topic priority list can be dynamically maintained. In this way, the data processing apparatus may determine the processing order of data according to the topic priorities in the topic priority list, thus achieving the priority configuration at the data granularity, and ensuring the transmission latency requirements and reliability of important data.
(7) The target topic with the highest topic priority may be selected from the current topic priority list, and the data bound to the target topic may be taken as the target data for the subsequent data processing operations, thus ensuring the transmission latency requirements and reliability of high-priority data.

It is to be noted that reference can be made to the technical effects brought by the corresponding embodiments of the first aspect for the technical effects brought by any one of the embodiments of the second aspect to the fifth aspect. Details are not described herein again.

It is to be understood that the foregoing general description and the detailed description below are merely examples and explanations, and do not limit the present invention.

### BRIEF DESCRIPTION OF DRAWINGS

The accompanying drawings are incorporated into the specification and constitute a part of the specification, illustrate embodiments consistent with the present invention, and are used together with the specification to explain the principles of the present invention, without imposing any undue limitation on the present invention.
FIG. 1 is a flowchart of a data processing method according to an example.
FIG. 2 is a schematic diagram of a data processing scenario according to an example.
FIG. 3 is a schematic diagram of a structure of a target cache space according to an example.
FIG. 4 is a flowchart of another data processing method according to an example.
FIG. 5 is a schematic diagram of a structure of a writer history cache according to an example.
FIG. 6 is a flowchart of yet another data processing method according to an example.
FIG. 7 is a flowchart of still another data processing method according to an example.
FIG. 8 is a block diagram of a data processing apparatus according to an example.
FIG. 9 is a block diagram of an electronic device according to an example.

### DETAILED DESCRIPTION

To enable those of ordinary skill in the art to better understand the technical solutions of the present invention, the technical solutions in the embodiments of the present invention are described clearly and completely below in conjunction with the accompanying drawings.

It is to be noted that terms such as "first", "second", and the like used in the specification, the claims, and the accompanying drawings of the present invention are intended to distinguish similar objects, and are not necessarily used to describe a specific order or sequence. It is to be understood that data used in this manner can be interchanged where appropriate, so that the embodiments of the present invention described herein can be implemented in sequences other than those illustrated or described herein. The embodiments described in the following examples do not represent all embodiments consistent with the present invention. Instead, the embodiments are merely examples of devices and methods consistent with certain aspects of the present invention as detailed in the appended claims.

The Data distribution service (DDS) communication protocol is a distributed real-time communication protocol, which implements data transmission based on a user datagram protocol (UDP). In addition, a controller area network (CAN) communication protocol is a real-time serial communication protocol used for communication among different components in a vehicle.

With the development of automotive electronic and electrical (E/E) architectures and the increase in vehicle functions, the volume of data exchanged among controllers gradually increases. To meet the increasingly growing data transmission requirements of in-vehicle communications, vehicle-wide communication has evolved from an exclusively CAN-based communication approach to a communication approach where CAN communication coexists with Ethernet communication based on the DDS communication protocol.

For considerations of traffic safety, user driving experience, and other factors, vehicles and other means of transportation need to ensure good timeliness and reliability of data communications. However, the current DDS communication protocol has difficulty meeting these requirements. The DDS communication protocol defines that the priorities can be configured through a transport priority policy.

For example, in the related art, the priority of each topic is preconfigured by category, so that an information channel corresponding to each topic can be established between any nodes based on the topic priority. During communication, data routing relationships are established based on the topic priorities for data transmission.

However, this solution can merely configure priorities at the granularity of topics or communication entities, and cannot achieve data-level priority configuration.

It is to be noted that the main controller in the vehicle control domain typically uses a highly integrated microcontroller unit (MCU) chip with good real-time performance. However, MCU chips have limited memory resources, and creating each topic occupies a portion of memory resources. Meanwhile, the main controller in the vehicle control domain needs to transmit a large volume of data, and a large number of DDS signals are usually transmitted at high frequency over a single topic.

In addition, during the initialization process upon vehicle power-up, state information synchronization is required between various modules, and there will also be scenarios where multiple communication entities transmit data. Configuring priorities only at the topic or communication entity may also cause delays or even loss of some signals. When the delayed or lost signals are critical signals, the safety of the vehicle may even be compromised.

For data communications, the DDS communication protocol is based on the UDP, where the UDP transmits datagrams in an unordered manner. Under normal network conditions, data is generally transmitted and received in the order they are sent. In the event of network congestion, it is difficult to guarantee the transmission latency and reliability of important data.

In view of this, the present invention provides a data processing method capable of ensuring the transmission latency requirements and reliability of data. The data processing apparatus can determine the data priority of the target data, so that the target data can be stored into the level corresponding to the data priority in the target cache space. Then, the data processing apparatus may perform a sending operation or a reading operation on data of different levels in the target cache space according to the data priority order. In this way, the data processing apparatus according to the present invention can preferentially send or read data with a higher data priority, thus avoiding problems of delay and loss of important data during network congestion, and ensuring transmission latency and reliability of important data.

It is to be noted that embodiments of the present invention may be mutually referenced or incorporated by reference. For example, identical or similar operations, as well as method embodiments, system embodiments and apparatus embodiments, may all be cross-referenced with each other without limitation.

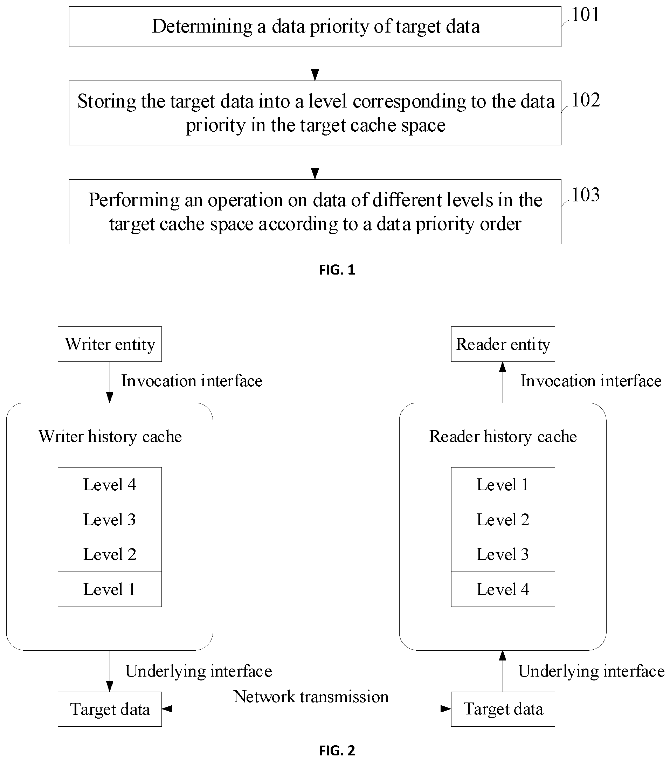

FIG. 1 is a flowchart of a data processing method according to an example. As shown in FIG. 1, the data processing method includes the following operations S101 to S103.

In operation S101, a data processing apparatus determines a data priority of target data.

The target data may be data to be sent or data to be received in the data processing apparatus, and the data priority is configured to represent a processing order for sending or receiving the data.

For example, the data priority may be represented by a numerical value. For example, the data priority may be divided into 1, 2, 3, and 4, where a smaller numerical value indicates a higher data priority. 1 indicates a highest priority, and 4 indicates a lowest priority, and so on. Alternatively, a smaller numerical value indicates a lower data priority. 1 indicates a lowest priority, and 4 indicates a highest priority, and so on. The data priority in the present invention may also be represented in other forms (such as numerical values in different bases, or different character identifiers). The present invention is not limited to this.

The data processing apparatus may be a vehicle controller, such as a processing chip configured in a vehicle. The data processing apparatus may also be a functional module configured to perform the data processing method provided in the present invention. The data processing apparatus may further be a computer program product configured to perform the data processing method. Alternatively, the data processing apparatus may further serve as a vehicle control domain system architecture, and the foregoing data processing method can be performed by controlling various components in the vehicle control domain system architecture.

In an embodiment, the data processing apparatus is configured to receive a target message, and determine a data priority of target data based on the target message.

The target message includes a data priority parameter of the target data.

As shown in FIG. 2, the data processing apparatus receives a target message based on a packet sending interface or a packet receiving interface defined by the DDS communication protocol, where the target message is configured with a data priority parameter corresponding to target data (such as a label indicating a data priority). The data processing apparatus may create a writer entity (writer) or a reader entity (reader) based on application requirements. The data processing apparatus may determine the data priority of the target data to be sent from the target message through the writer entity, and determine the data priority of the target data to be received from the target message through the reader entity.

Each writer entity in the data processing apparatus is configured with a corresponding writer history cache (WHC), and each reader entity is configured with a corresponding reader history cache (RHC). The writer history cache is configured to temporarily store data to be sent by the corresponding writer entity, and the reader history cache is configured to temporarily store data to be read by the corresponding reader entity.

In operation S102, the data processing apparatus stores the target data into a level corresponding to the data priority in the target cache space.

The target cache space includes a plurality of levels, and the levels in the target cache space correspond to data priorities of data. That is, the plurality of levels divide the target cache space into a plurality of portions, and each level may independently store data. The levels may be represented in the form of stacks, queues, or the like.

A corresponding relationship between the levels in the target cache space and data priorities of data may be a one-to-one corresponding relationship, a one-to-many corresponding relationship, or a many-to-one corresponding relationship, and can be configured according to actual conditions. The present invention is not limited thereto.

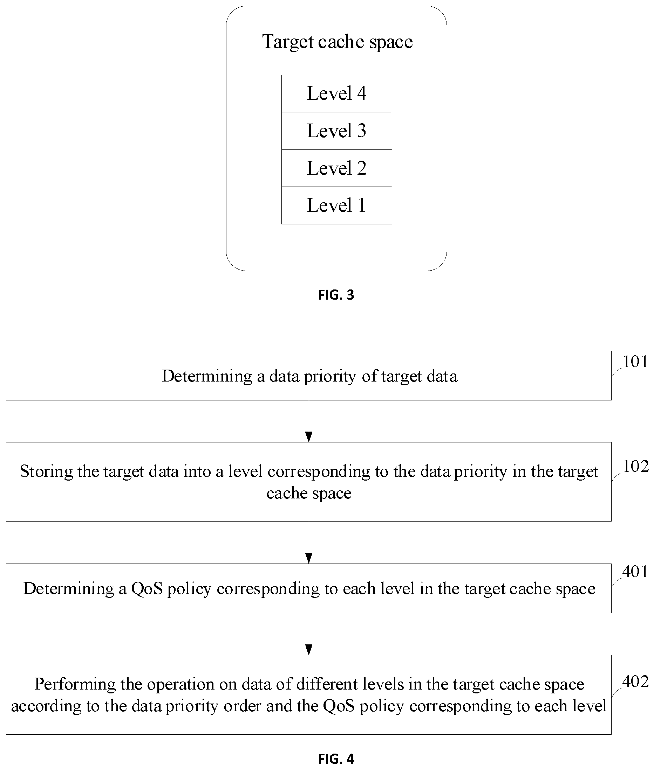

Taking FIG. 3 as an example, the target cache space may be divided into four levels, namely Level 1, Level 2, Level 3, and Level 4. Taking the data priorities also divided into 1, 2, 3 and 4 as an example, each one of the levels of the target cache space correspond a respective one of the data priorities, with Level 1 corresponding to data priority 1, Level 2 corresponding to data priority 2, Level 3 corresponding to data priority 3, and Level 4 corresponding to data priority 4. In this way, in a case where the data processing apparatus determines that the data priority of the target data is 1, the target data may be stored in Level 1; in a case where the data priority of target data is 2, the target data may be stored in Level 2; and so on.

As shown in FIG. 2, the target cache space may be a writer history cache and/or a reader history cache. The data processing apparatus may store the target data into a level corresponding to the data priority in the writer history cache through a writer entity. The data processing apparatus may also store the target data into a level corresponding to the data priority in the reader history cache through a reader entity.

In operation S103, the data processing apparatus performs an operation on data of different levels in the target cache space according to a data priority order.

In a case where the operation is a sending operation, the target cache space is a writer history cache. In a case where the operation is a reading operation, the target cache space is a reader history cache.

In an embodiment, the data processing apparatus determines a target level from the target cache space and performs the operation on data in the target level.

The data stored in the target level is data with a highest data priority in a target cache space at a current time.

For example, as shown in FIG. 2, for data in the writer history cache, the data processing apparatus may preferentially send data in a level corresponding to a high data priority through invoking a packet sending interface, and then send data in a level corresponding to a low data priority. For data in the reader history cache, the data processing apparatus can preferentially read data in a level corresponding to a high data priority through invoking a packet receiving interface, and then read data in a level corresponding to a low data priority.

It is to be noted that the writer history cache and the reader history cache can be associated through a topic. The data processing apparatus sends data in the writer history cache to the associated reader history cache. The corresponding relationship between the writer history cache and the reader history cache may be one-to-one corresponding relationship, one-to-many corresponding relationship, or many-to-one corresponding relationship. A corresponding relationship may or may not exist between the levels in the writer history cache and the levels in the reader history cache.

For example, in a case where the corresponding relationship exists between the levels in the writer history cache and the levels in the reader history cache (for example, as shown in FIG. 2, both the writer history cache and the reader history cache include four levels, with one-to-one correspondence between the levels), the data processing apparatus may send data of different levels in the writer history cache to the corresponding levels in the reader history cache. In this case, the data priorities of data of different levels in the reader history cache also correspond to the levels in the cache space.

In a case where the corresponding relationship does not exist between the levels in the writer history cache and the levels in the reader history cache, the data processing apparatus may store the target data into a corresponding level based on a corresponding relationship between the data priority of the target data and the levels of the reader history cache. In this case, the data processing apparatus may classify the importance of data according to the actual requirements of the reader entity, thus configuring a reading priority order of the data.

Based on the foregoing technical solution, the data processing apparatus may determine a data priority of the target data, so that the target data can be stored into the level corresponding to the data priority in the target cache space. Then, the data processing apparatus may perform a sending operation or a reading operation on data of different levels in the target cache space according to the data priority order. In this way, the data processing apparatus according to the present invention can preferentially send or read data with a higher data priority, thus avoiding problems of delay and loss of important data during network congestion, and ensuring transmission latency and reliability of important data.

In some embodiments, to further ensure the transmission reliability of important data, with reference to FIG. 1 and as shown in FIG. 4, the data processing method provided in the present invention also includes the following operations S401 to S402.

In operation S401, the data processing apparatus determines a quality of service (QoS) policy corresponding to each level in the target cache space.

The QoS policy is used to define a guarantee level of network data transmission.

For example, the QoS policies include a reliable transmission policy, a best effort policy, and the like.

In a case where the configured QoS policy is the reliable transmission policy, the data processing apparatus sends a heartbeat submessage carrying a data sample sequence number simultaneously when sending the data through the writer entity. After reading the data from the reader history cache through the reader entity, the data processing apparatus sends a reply submessage confirming the receipt of the data, and only then clears the data temporarily stored in the reader history cache. In a case where the data processing apparatus fails to read the data from the reader history cache through the reader entity, the data processing apparatus sends the reply submessage indicating non-receipt of the data. The data processing apparatus responds to the reply submessage and resends the data through the writer entity, thus ensuring the transmission reliability of the data.

In a case where the configured QoS policy is the best effort policy, the data processing apparatus clears the data temporarily stored in the writer history cache after sending the data in the writer history cache through the writer entity, without confirming whether the data is successfully sent to the reader entity. Correspondingly, the data processing apparatus does not confirm whether data loss occurs when reading the data stored in the reader history cache through the reader entity.

It is to be noted that, in the related art, the QoS policies are usually applied to a cache space or a communication entity. Due to performance resource limitations of current in-vehicle chips (such as MCU chips) and continuously increasing data transmission requirements, a solution in which the QoS policies are configured for an entire cache space or a communication entity occupies a large amount of performance resources, thereby impairing normal vehicle operation. Since the target cache space in the present invention is divided into a plurality of levels, and different levels are configured to store data of different importance degrees based on the data priorities, the data processing apparatus can provide QoS guarantees for data of different importance degrees by configuring corresponding QoS policies for each level in the target cache space. Meanwhile, the data processing apparatus merely needs to provide reliable transmission QoS guarantees for important data, thus saving a large amount of device performance resources and avoiding a problem of impaired vehicle operation caused by insufficient performance resources.

In addition, the present invention does not limit an execution order of operations S101 to S102 and operation S401. Operation S401 may be executed before or after operation S102, and may also be executed before or after operation S101. FIG. 4 merely illustrates the data processing method provided in the present invention by taking the execution of operation S401 after operation S102 as an example.

In an embodiment, the above operation S103 can be implemented through the following operation S402.

In operation S402, the data processing apparatus performs the operation on data of different levels in the target cache space according to the data priority order and the QoS policy corresponding to each level.

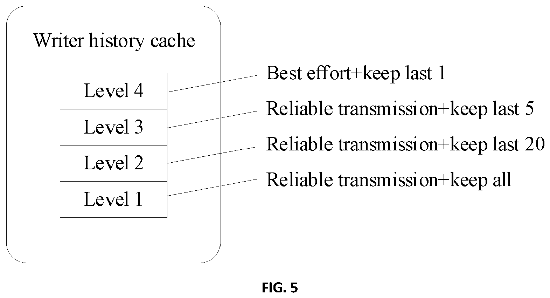

Taking the writer history cache as an example, with reference to FIG. 2 and as shown in FIG. 5, the writer history cache includes Level 1, Level 2, Level 3, and Level 4. Level 1 is used for storing data with the highest data priority, Level 2 is used for storing data with the second-highest data priority, and so on.

Level 1 is configured with a reliable transmission policy and a keep all policy. In a case where the data processing apparatus sends data in Level 1 according to the data priority order, the data processing apparatus confirms whether the data is successfully sent to the reader history cache, and retains historical data without performing the data clearance.

Level 2 is configured with a reliable transmission policy and a keep last 20 policy. In a case where the data processing apparatus sends data in Level 2 according to the data priority order, the data processing apparatus confirms whether the data is successfully sent to the reader history cache, retains the latest 20 historical data entries, and deletes older data beyond the 20 most recent entries when new data is stored.

Level 3 is configured with a reliable transmission policy and a keep last 5 policy. In a case where the data processing apparatus sends data in Level 3 according to the data priority order, the data processing apparatus confirms whether the data is successfully sent to the reader history cache, retains the latest 5 historical data entries, and deletes older data beyond the 5 most recent entries when new data is stored.

Level 4 is configured with a best effort policy and a keep last 1 policy. In a case where the data processing apparatus sends data in Level 4 according to the data priority order, the data processing apparatus does not confirm whether the data is successfully sent to the reader history cache, retains merely the most recent historical data entry, and deletes older data when new data is stored.

According to the foregoing technical means, the data processing apparatus in the present invention may configure a corresponding QoS policy for each level in the target cache space, so as to perform a corresponding operation on data in each level based on the data priority order and the QoS policy configured for each level. Since the levels in the target cache space of the present invention can be used for dividing data of different data priorities, compared with the related art in which QoS policy configuration can only be performed for the entire cache space, the technical solution provided by the present invention can realize the QoS policy configuration at a data granularity, thus ensuring the transmission reliability of important data while saving the device performance resources.

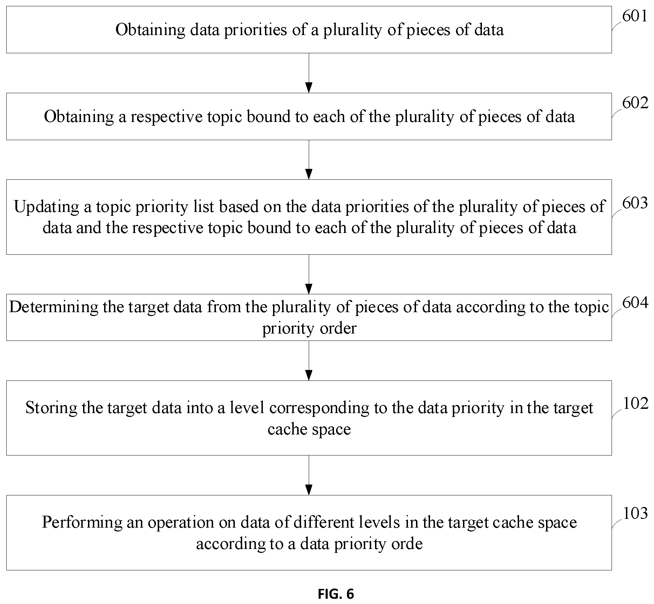

In some embodiments, the technical solutions provided by the present invention can further implement priority guarantee at the data granularity in combination with topics. With reference to FIG. 1 and as shown in FIG. 6, the above operation S101 may be implemented by the following operation S601.

In operation S601, the data processing apparatus obtains data priorities of a plurality of pieces of data.

The plurality of pieces of data include target data.

In an embodiment, the data processing apparatus may receive a plurality of target messages, thus determining the data priorities of the plurality of pieces of data based on the plurality of target messages.

The target messages include data priority parameters of the data. Reference can be made to the description in the above operation S101 for related description. Details are not described herein again.

In another embodiment, the data includes a data priority parameter. After receiving a plurality of pieces of data, the data processing apparatus may parse the received data to obtain data priorities of the plurality of pieces of data.

For example, in the DDS communication protocol, the structural information of data is usually defined through an interface definition language (IDL), and the structural information of each type of data may be preconfigured. In the present invention, the data priority parameters may be configured in the structural information of data. In this way, the data processing apparatus may obtain the data priorities of the data by parsing the received data.

In an embodiment, the method further includes the following operations S602 to S604.

In operation S602, the data processing apparatus obtains a respective topic bound to each of the plurality of pieces of data.

The topics are used to associate the writer history cache and the reader history cache.

It is to be noted that in a case where the data processing apparatus needs to transmit data, the data needs to be bound to a topic, and the topic is further associated with a writer history cache and a reader history cache. The data processing apparatus may store the data to be sent into the writer history cache associated with the bound topic through a writing entity. The data in the writer history cache is transmitted to the reader history cache associated with the topic through an underlying communication link. The data processing apparatus may read the data from the reader history cache associated with the topic through a reading entity.

For example, the data processing apparatus may obtain topic identifiers of a plurality of topics and bind the data to the topics based on the topic identifiers.

In operation S603, the data processing apparatus updates a topic priority list based on the data priorities of the plurality of pieces of data and the respective topic bound to each of the plurality of pieces of data.

The topic priority list includes a plurality of topics and a topic priority corresponding to each of the plurality of topics.

In an embodiment, the data processing apparatus may determine, based on the data priorities of the plurality of pieces of data, a topic priority of the topic bound to each of the plurality of pieces of data. The data processing apparatus updates the topic priority list based on the topic priority of each topic.

For example, there exists a corresponding relationship between the data priorities of the data and the topic priorities of the topics. The data processing apparatus may determine the topic priority of the topic bound to the data based on the corresponding relationship. The data processing apparatus then updates the topic priority list according to the obtained topic priorities.

It is to be noted that the topic priority list in the present invention is dynamically updated. During the operation of vehicle, data to be transmitted changes in real time. The topics and topic priorities in the topic priority list determined by the data processing apparatus are also update correspondingly. In the related art, directly configuring a priority of a topic cannot implement priority configuration for data. In contrast, in the present invention, the topic priority of a topic is dynamically updated based on the data priorities of data that currently need to be transmitted. In other words, the present invention can achieve priority configuration for data to be transmitted by dynamically maintaining a topic priority list, thus ensuring the latency and reliability of important data.

In an embodiment, in a case where the data to be transmitted in the data processing apparatus changes, the data processing apparatus may obtain the data priorities of the changed data and update the topic priority list based on the data priorities.

In another embodiment, the data processing apparatus may obtain data periodically according to a preset cycle, and update the topic priority list based on the data priorities of the obtained data.

In operation S604, the data processing apparatus determines the target data from the plurality of pieces of data according to the topic priority order.

It is to be noted that in a case where the load of the data processing apparatus is high, and data under a plurality of topics need to be processed, the data processing apparatus cannot process the data under each topic simultaneously. The data processing apparatus may determine the target data from the plurality of pieces of data according to the topic priority order represented in the topic priority list, and process the target data sequentially.

In an embodiment, the data processing apparatus determines a target topic from the topic priority list at the current time, and takes the data bound to the target topic from the plurality of pieces of data as the target data.

The target topic is the topic with the highest topic priority in the topic priority list.

For example, the data processing apparatus takes the data of the topic with the highest current topic priority as the target data to perform subsequent corresponding data processing operations, such as serialization, real time publish subscribe (RTPS) operations, or calling an underlying interface to transmit data. In a case where a topic with a higher topic priority exists after updating the topic priority list, the data processing apparatus suspends the current processing operation and preferentially performs the processing operation on the data of the topic with the higher topic priority. After the processing is completed, the data processing apparatus continues to perform the processing operation on data of the topic with the next highest topic priority, and so on.

Based on the foregoing technical solution, the data processing apparatus in the present invention may obtain the data priorities of the plurality of pieces of data, and update the topic priority list that includes the topic bound to each piece of data based on the data priorities. Subsequently, the data processing apparatus may select the target data from the plurality of pieces of data according to the topic priority order represented in the topic priority list to perform the subsequent data processing operations, thus achieving the priority configuration at the data level, and further ensuring the transmission latency requirements and reliability of important data.

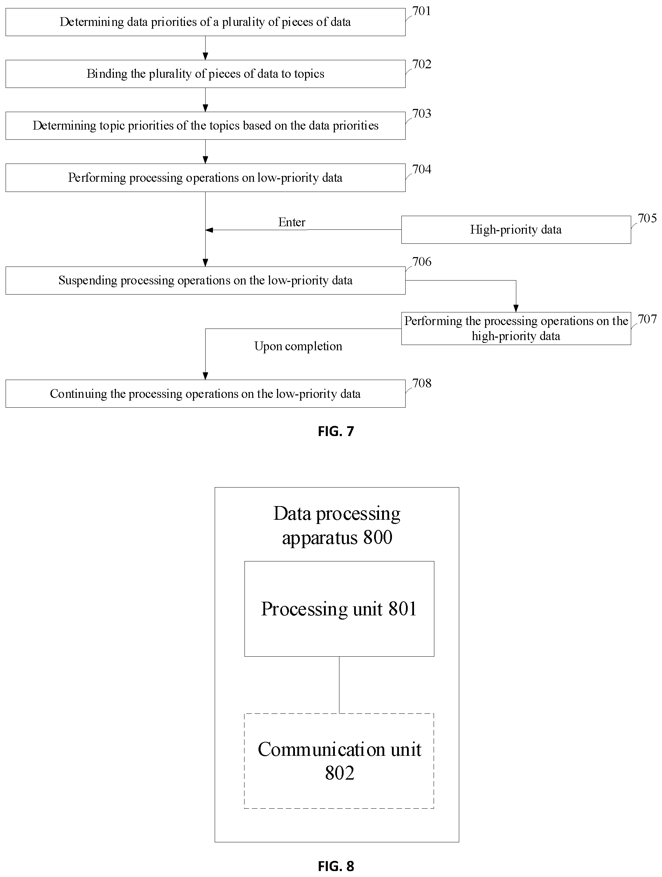

Below, the data processing method provided by the present invention is described in conjunction with a practical scenario. As shown in FIG. 7, the method includes operations S701 to S708.

In operation S701, the data processing apparatus determines data priorities of a plurality of pieces of data.

For example, the data processing apparatus may determine the data priorities of the data based on the IDL definitions of the data.

In operation S702, the data processing apparatus binds the plurality of pieces of data to topics.

For example, the data processing apparatus may perform the binding operation between the data and the topics based on instructions during communication initialization.

In operation S703, the data processing apparatus determines topic priorities of the topics based on the data priorities.

For example, the data processing apparatus may assign priority identifiers to each topic based on the data bound to the topic.

In operation S704, the data processing apparatus performs processing operations on low-priority data.

For convenience of description, the low-priority data refers to data with a lower priority relative to high-priority data in subsequent operations. For the current topic priority list, the low-priority data corresponds to data of the topic with the highest priority.

In operation S705, the data processing apparatus obtains high-priority data.

For example, the data processing apparatus obtains the high-priority data and updates the topic priority list based on the current data.

In operation S706, the data processing apparatus suspends processing operations on the low-priority data.

In operation S707, the data processing apparatus performs the processing operations on the high-priority data.

In a case where the high-priority data exists in the data processing apparatus, the data processing apparatus may suspend the processing of the low-priority data, preferentially process the high-priority data, and continues the processing of the low-priority data after completing the processing of the high-priority data.

In operation S708, the data processing apparatus continues the processing operations on the low-priority data.

The foregoing mainly introduces the solution provided by the present invention from the perspective of methods. To implement the foregoing functions, the data processing apparatus or electronic device includes hardware structures and/or software modules for performing various functions. It is to be understood by those skilled in the art that the present invention can be implemented in the form of hardware or a combination of hardware and computer software, in conjunction with the exemplary units and algorithm operations described in the embodiments disclosed herein. Whether a specific function is executed by hardware or by computer software driving hardware depends on the particular application and design constraints of the technical solution. Those skilled in the art may use different methods to implement the described functions for each particular application, but it should not be considered that the implementation goes beyond the scope of the present invention.

The embodiments of the present invention may perform functional module division on a data processing apparatus or an electronic device according to the foregoing methods. For example, the data processing apparatus or electronic device may include functional modules corresponding to respective functions, or two or more functions may be integrated into one processing module. The above integrated modules may be implemented either in the form of hardware or in the form of software functional modules. It should be noted that the division of modules in the embodiments of the present invention is illustrative and merely a logical function division, and other division manners may be adopted in actual implementation.

FIG. 8 is a block diagram of a data processing apparatus according to an example. Referring to FIG. 8, the data processing apparatus 800 includes a processing unit 801.

The processing unit 801 is configured to determine a data priority of target data.

The processing unit 801 is further configured to store the target data into a level corresponding to the data priority in a target cache space, where the target cache space includes a plurality of levels, and the levels in the target cache space correspond to data priorities of data.

The processing unit 801 is further configured to perform an operation on data of different levels in the target cache space according to a data priority order, where in a case where the operation is a sending operation, the target cache space is a writer history cache, and in a case where the operation is a reading operation, the target cache space is a reader history cache.

According to the foregoing technical means, the processing unit 801 in the present invention may determine the data priority of the target data, so as to store the target data into the level corresponding to the data priority in the target cache space. Subsequently, the processing unit 801 may perform the sending operation or the reading operation on data of different levels in the target cache space according to the data priority order. In this way, the present invention may preferentially send or read data with a high data priority, thus avoiding problems of delay and loss of important data during network congestion, and ensuring transmission latency and reliability of important data.

In an embodiment, the processing unit 801 is further configured to: determine a QoS policy corresponding to each of the plurality of levels in the target cache space; and perform the operation on data of different levels in the target cache space according to the data priority order and the QoS policy corresponding to each of the plurality of levels.

In an embodiment, the processing unit 801 is further configured to: determine a target level from the target cache space, where data stored in the target level is data with a highest data priority in the target cache space at a current time; and perform the operation on data in the target level.

In an embodiment, the device further includes a communication unit 802 configured to receive a target message, where the target message includes a data priority parameter of the target data; and the processing unit 801 is further configured to determine the data priority of the target data based on the target message.

In an embodiment, the processing unit 801 is further configured to: obtain data priorities of a plurality of pieces of data, where the plurality of pieces of data include the target data; obtain a respective topic bound to each of the plurality of pieces of data, where the topic is used to associate the writer history cache and the reader history cache; update a topic priority list based on the data priorities of the plurality of pieces of data and the respective topic bound to each of the plurality of pieces of data, where the topic priority list includes a plurality of topics and a topic priority corresponding to each of the plurality of topics; and determine the target data from the plurality of pieces of data according to a topic priority order.

In an embodiment, the processing unit 801 is further configured to: determine, based on the data priorities of the plurality of pieces of data, a topic priority of the respective topic bound to each of the plurality of pieces of data; and update the topic priority list based on the topic priority corresponding to each of the plurality of topics.

In an embodiment, the processing unit 801 is further configured to: determine a target topic from the topic priority list at a current time, where the target topic is a topic with a highest topic priority in the topic priority list; and take data bound to the target topic from the plurality of pieces of data as the target data.

For the apparatus in the foregoing embodiment, specific manners of performing the operations by various modules are described in detail in embodiments related to the method, and details are not described herein.

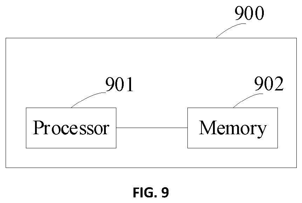

FIG. 9 is a block diagram of an electronic device according to an example. As shown in FIG. 9, an electronic device 900 includes, but is not limited to, a processor 901 and a memory 902.

The memory 902 is configured to store instructions executable by the processor 901. It is to be understood that the processor 901 is configured to execute the instructions to perform the data processing methods described in the foregoing embodiments.

It is to be noted that those skilled in the art may understand that the structure of the electronic device illustrated in FIG. 9 does not constitute a limitation on the electronic device. The electronic device may include more or fewer components than those shown in FIG. 9, or combine certain components, or adopt different component arrangements.

The processor 901 serves as the control center of the electronic device, which connects various parts of the entire electronic device using various interfaces and circuits. By running or executing software programs and/or modules stored in the memory 902 and retrieving data stored in the memory 902, the processor 901 performs various functions of the electronic device and processes data, thereby implementing overall monitoring of the electronic device. The processor 901 may include one or more processing units. Alternatively, the processor 901 may integrate an application processor and a modem processor, where the application processor mainly processes operating systems, user interfaces, application programs, and the like, and the modem processor mainly processes wireless communications. It is to be understood that the above modem processor may also not be integrated into the processor 901.

The memory 902 may be configured to store software programs and various data. The memory 902 may mainly include a program storage area and a data storage area, where the program storage area may store an operating system, application programs required by at least one functional module (such as a determination unit, a processing unit, etc.), and the like. In addition, the memory 902 may include a high-speed random access memory, and may also include a non-volatile memory, such as at least one magnetic disk storage device, flash memory device, or other non-volatile solid-state storage devices.

In an example, there is also provided a computer-readable storage medium including instructions, such as the memory 902 including instructions. The instructions may be executed by the processor 901 of the electronic device 900 to implement the methods in the above embodiments.

In actual implementation, the functions of the processing unit 801 and the communication unit 802 in FIG. 8 may both be implemented by the processor 901 in FIG. 9 invoking a computer program stored in the memory 902. For the specific execution process, reference may be made to the description in the method part of the above embodiments, which will not be repeated here.

Alternatively, the computer-readable storage medium may be a non-transitory computer-readable storage medium. For example, the non-transitory computer-readable storage medium may be a read-only memory (ROM), a random access memory (RAM), a CD-ROM, a magnetic tape, a floppy disk, or an optical data storage device, and the like.

In an example, the present invention further provides a computer program product including one or more instructions. The one or more instructions may be executed by the processor 901 of the electronic device to complete the methods described in the foregoing embodiments.

It is to be noted that when the instructions in the above computer-readable storage medium or the one or more instructions in the computer program product are executed by the processor of the electronic device, each process of the above method embodiments is implemented, and the same technical effects as the above methods can be achieved. To avoid repetition, details are not described herein again.

According to the descriptions of the foregoing embodiments, those skilled in the art can clearly understand that, for the convenience and brevity of description, only the division of the above functional modules is illustrated by way of example. In practical applications, the above functions may be allocated to different functional modules as required, that is, the internal structure of the apparatus is divided into different functional modules to complete all or part of the functions described above.

It is to be understood that, in the embodiments provided in the present invention, the described apparatus and methods may be implemented in other ways. For example, the apparatus embodiments described above are merely illustrative. For example, the division of modules or units is only a logical function division, and there may be other division manners in actual implementation. For example, a plurality of units or components may be combined or integrated into another apparatus, or some features may be omitted or not executed. In addition, the coupling or direct coupling or communication connection shown or discussed between each other may be indirect coupling or communication connection through some interfaces, apparatuses or units, and may be in electrical, mechanical or other forms.

Units described as separate components may or may not be physically separate, and components shown as units may be one physical unit or multiple physical units, that is, they may be located in one place, or may be distributed over multiple different locations. Some or all of the units may be selected according to actual needs to achieve the objectives of the solutions of the embodiments.

In addition, the functional units in the embodiments provided in the present invention may be integrated into one processing unit, or each unit may exist physically separately, or two or more units may be integrated into one unit. The above integrated units may be implemented either in the form of hardware or in the form of software functional units.

In a case where the integrated units are implemented as software functional units and used or sold as independent products, the integrated units can be stored on a computer-readable storage medium. Based on such an understanding, the technical solutions of the embodiments of the present invention essentially, or the part contributing to the prior art, or all or part of the technical solutions may be embodied in the form of a software product. The software product is stored in a storage medium and includes several instructions to enable a device (which may be a single-chip microcomputer, a chip, etc.) or a processor to execute all or part of the operations of the methods in various embodiments of the present invention. The foregoing storage medium includes any medium that can store program code, such as a USB flash drive, a removable hard disk, a read-only memory (ROM), a random access memory (RAM), a magnetic disk, or an optical disc.

The above are only specific embodiments of the present invention, but the protection scope of the present invention is not limited thereto. Any modifications or substitutions within the technical scope disclosed in the present invention shall be encompassed within the protection scope of the present invention. Therefore, the protection scope of the present invention shall be subject to the protection scope of the claims.

## Claims

1. A data processing method, comprising:
determining a data priority of target data;
storing the target data into a level corresponding to the data priority in a target cache space, wherein the target cache space comprises a plurality of levels, and the plurality of levels in the target cache space correspond to data priorities of data; and
performing an operation on data of different levels in the target cache space according to a data priority order, wherein in a case where the operation is a sending operation, the target cache space is a writer history cache, and in a case where the operation is a reading operation, the target cache space is a reader history cache.

2. The method according to claim 1, wherein the method further comprises:
determining a quality of service (QoS) policy corresponding to each of the plurality of levels in the target cache space,
wherein performing the operation on data of different levels in the target cache space according to the data priority order comprises:
performing the operation on data of different levels in the target cache space according to the data priority order and the QoS policy corresponding to each of the plurality of levels.

3. The method according to claim 1, wherein performing the operation on data of different levels in the target cache space according to the data priority order comprises:
determining a target level from the target cache space, wherein data stored in the target level is data with a highest data priority in the target cache space at a current time; and
performing the operation on data in the target level.

4. The method according to any one of claims 1 to 3, wherein determining the data priority of the target data comprises:
receiving a target message, wherein the target message comprises a data priority parameter of the target data; and
determining the data priority of the target data based on the target message.

5. The method according to any one of claims 1 to 4, wherein determining the data priority of target data comprises:
obtaining data priorities of a plurality of pieces of data, wherein the plurality of pieces of data comprise the target data,
wherein after determining the data priority of the target data, the method further comprises:
obtaining a respective topic bound to each of the plurality of pieces of data, wherein the topic is used to associate the writer history cache and the reader history cache;
updating a topic priority list based on the data priorities of the plurality of pieces of data and the respective topic bound to each of the plurality of pieces of data, wherein the topic priority list comprises a plurality of topics and a topic priority corresponding to each of the plurality of topics; and
determining the target data from the plurality of pieces of data according to a topic priority order.

6. The method according to claim 5, wherein updating the topic priority list based on the data priorities of the plurality of pieces of data and the respective topic bound to each of the plurality of pieces of data comprises:
determining, based on the data priorities of the plurality of pieces of data, a topic priority of the respective topic bound to each of the plurality of pieces of data; and
updating the topic priority list based on the topic priority corresponding to each of the plurality of topics.

7. The method according to claim 5 or 6, wherein determining the target data from the plurality of pieces of data according to the topic priority order comprises:
determining a target topic from the topic priority list at a current time, wherein the target topic is a topic with a highest topic priority in the topic priority list; and
taking data bound to the target topic from the plurality of pieces of data as the target data.

8. A data processing apparatus, comprising:
a processing unit, configured to determine a data priority of target data;
wherein the processing unit is further configured to store the target data into a level corresponding to the data priority in a target cache space, wherein the target cache space comprises a plurality of levels, and the plurality of levels in the target cache space correspond to data priorities of data; and
the processing unit is further configured to perform an operation on data of different levels in the target cache space according to a data priority order, wherein in a case where the operation is a sending operation, the target cache space is a writer history cache, and in a case where the operation is a reading operation, the target cache space is a reader history cache.

9. An electronic device, comprising: a processor and a communication interface, wherein the communication interface is coupled to the processor, and the processor is configured to execute a computer program or instructions to perform the data processing method according to any one of claims 1 to 7.

10. A computer-readable storage medium having stored thereon instructions, which, when executed by a computer, cause the computer to perform the data processing method according to any one of claims 1 to 7.
